# EUROPEAN PATENT SPECIFICATION

(11) **EP 1 089 301 B1**
(45) Date of publication and mention of the grant of the patent: **19.11.2008**
(21) Application number: 00117510.8
(22) Date of filing: 14.08.2000
(51) Int. Cl.: H01F 7/16

(54) **Apparatus and method for changing the dynamic response of an electromagnetically operated actuator**
Anordnung und Verfahren zur Änderung des dynamischen Verhaltens eines elektromagnetisch betätigten Antriebs
Dispositif et procédé pour changer la réponse dynamique d'un actionneur à commande électromagnétique

(30) Priority: 01.10.1999 US 410584
(43) Date of publication of application: 04.04.2001
(73) Proprietor: Siemens VDO Automotive Corporation, Auburn Hills, MI 48326-2980 (US)
(72) Inventor: Alyanak, Mehmet Zeki, Yorktown, VA 23693 (US)
(74) Representative: Morgan, Marc

(56) References cited:
- EP-A- 0 172 591
- GB-A- 1 213 925
- US-A- 2 419 333
- US-A- 4 044 324
- US-A- 4 131 866
- US-A- 5 345 050
- PATENT ABSTRACTS OF JAPAN vol. 010, no. 302 (E-445), 15 October 1986 (1986-10-15) & JP 61 116806 A (CANON INC), 4 June 1986 (1986-06-04)

## Description

### BACKGROUND OF THE INVENTION

The invention relates in general to electromagnetically operated actuators for controlling fluid flow and in particular to varying the dynamic response of such actuators.

Various components such as servo-valves, pressure regulators and fuel injectors may be used in both open and closed loop dynamic control systems for controlling fluid flow. It may be necessary to change the response characteristic of such components to fine tune the component within the system or to alter the overall system characteristic.

Electromagnetically operated actuators for controlling fluid flow generally include an armature disposed in a sleeve and actuated by an electric coil. The actuators control the amount of fluid flow at different pressures and are designed to operate within a certain range. Various conditions, such as high pressure and temperature, may push the limits of the actuator's operating range. Conditions such as high pressure and temperature change the operating fluid viscosity dramatically. Such changes in fluid viscosity may force the actuator to become unstable and oscillate. Thus, a need exists for an actuator which remains stable under varying conditions of pressure and temperature.
US4131866 discloses an electromechanically operated actuator in accordance with the pre-characterising clause of the main claim.
US 4044323 discloses an elastomeric seal retained in a groove of an armature and constrained by side walls of the groove. A similar sealing arrangement is shown in US 4896 127. Both arrangements disclose circular grooves.

### SUMMARY OF THE INVENTION

The present invention is characterized by a groove in an armature of the actuator being formed in a helical pattern.

Further objects, features and advantages of the invention will become apparent from the following detailed description taken in conjunction with the following drawing.

### BRIEF DESCRIPTION OF THE DRAWING

Figure 1 is a cross-section of an arrangement not lying within the scope of the invention.
Figure 2 shows the groove and spring member of Figure 1 in an enlarged view.
Figure 3 is a perspective view of the armature of Figure 1.
Figure 4 is a perspective view of a further arrangement not lying within the scope of the invention.
Figure 5 is a perspective view of an embodiment of the invention.
Figures 6 to 17 show further arrangements not lying within the scope of the invention.

### DETAILED DESCRIPTON OF THE PREFERRED EMBODIMENT

The embodiments of the invention may be used in components such as servo-valves, regulators and injectors for stabilizing system oscillations. An exemplary application is to stabilize fuel system pressure oscillations, although the embodiments may be used in other applications as well.

The embodiments of the invention include an electromagnetically operated armature. The armature is movably disposed in a sleeve. An electric coil causes the armature to move in the sleeve. At least one groove is formed on an exterior surface of the armature. A spring member is disposed in the groove. The spring member is free to expand and make contact with the sleeve while maintaining contact with the armature. Because it is a spring, the spring member exerts a radially outwardly directed spring force against the sleeve. The spring member, therefore, constantly exerts mechanical friction between the armature and the sleeve. The mechanical friction slows the response of the armature movement and extends the stable operating range of the component in which the armature is disposed.

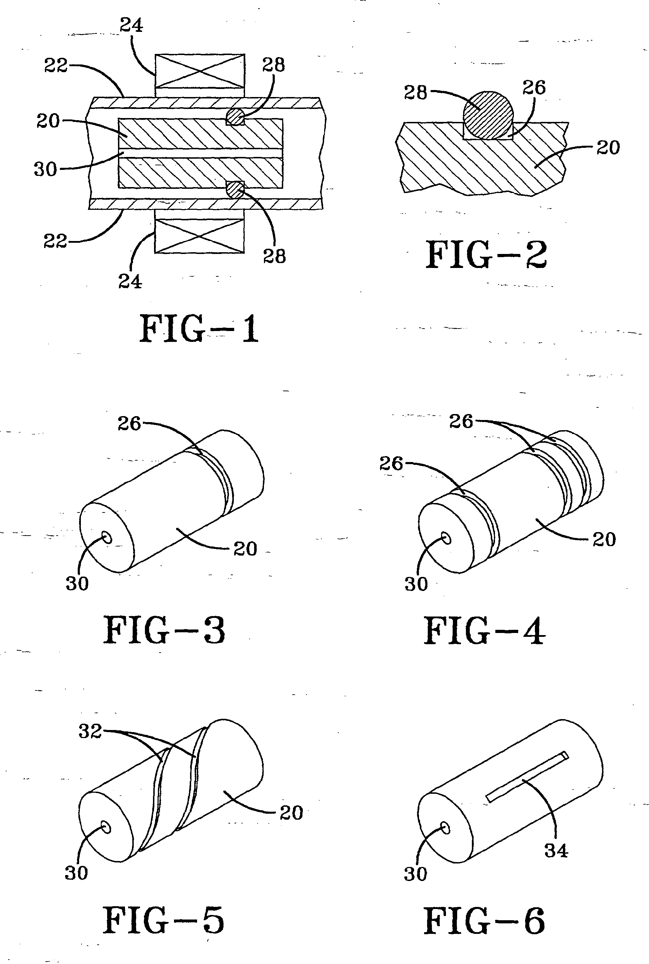

Referring to Figures 1-3, in an arrangement not within the scope of the invention, an armature 20 is movably disposed in a sleeve 22. When energized, an electric coil 24 causes the armature 20 to move within the sleeve 22. The armature 20 has at least one groove 26 formed on an exterior surface thereof. A spring member 28 is disposed in the groove 26 and contacts the sleeve 22. The spring member 28 exerts a radially outwardly directed spring force against the sleeve 22. A hole 30 extends axially through the armature 20 so that fluid may flow through the armature from one side to the other. The hole 30 may be formed along the longitudinal axis of the armature or may be offset from the longitudinal axis.

The armature 20 is generally cylindrical in shape, although other shapes of the armature are possible. The groove 26 may be formed in the armature 20 by, for example, machining, or the armature 20 may be cast with the groove 26 formed during the casting process. The groove 26 is located on the armature 20 where it will not interfere with the magnetic path.

The groove 26 is concentric with the longitudinal axis of the armature. The groove 26 extends at least partially around the circumference of the armature and may extend completely around the armature. Likewise, the spring member 28 may extend partially around the circumference of the armature or it may extend completely around the armature. The spring member 28 also reduces wear on the armature.

The sleeve 22 and spring member 28 may be made of, for example, metal, plastic or fiber-reinforced plastic. In one embodiment, the spring member 28 is made of piano wire. Whatever the material of construction, the spring member 28 functions as more than a mere seal or bearing surface between the armature 20 and the sleeve 22. The spring member 28 functions as an active spring by exerting a radially outwardly directed spring force against the sleeve 22. The armature 20 is made of a metal.

The amount of friction between the spring member 28 and the sleeve 22 may be varied by changing the diameter or the stiffness of the spring member 28. The amount of friction may also be changed by adding additional grooves 26 with spring members 28 disposed therein. Figure 4 shows an armature 20 with three grooves 26 formed therein.
Figure 5 shows an arrangement in accordance with the invention and it has an armature 20 with a helical groove 32. As in the case of the concentric grooves 26, the helical groove 32 receives a spring member 28.

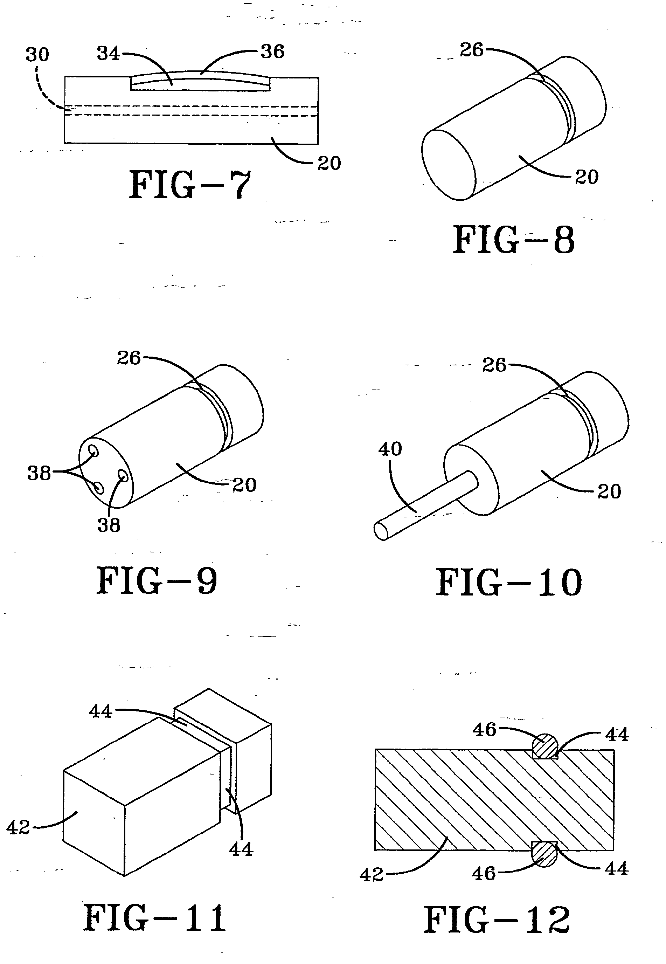

Figure 6 shows an arrangement not in accordance with the invention and it has an armature 20 with a groove 34 that is substantially parallel to the longitudinal axis of the armature. Figure 7 is a side view of the armature of Figure 6 showing a spring member 36. The spring member 36 is substantially horizontal, but is longer than the groove 34. Because the spring member 36 is longer than the groove 34, it bows upward to provide a radially outwardly directed spring force against the sleeve 22.
Figure 8 shows a further arrangement not in accordance with the invention with an armature 20 with groove 26. In this arrangement, the armature 20 has no through holes. Figure 9 shows an armature 20 with three through holes 38. The through holes 38 extend axially through the armature 20 so that fluid may flow through the armature from one side to the other. The number and placement of the through holes may be varied to suit individual operating conditions.
Figure 10 is a perspective view of another arrangement not in accordance with the present invention. The armature 20 with groove 26 includes a plunger or valve member 40. The valve member 40 may be formed integrally with the armature 20 or may be attached to the armature by, for example, threads. The valve member 40 may close and open an orifice (not shown) in the particular pressure regulating device within which the armature is disposed. It is also possible that the armature itself, without the additional valve member 40, may function as a plunger or means for opening and closing an orifice.
Figure 11 is a perspective view of another arrangement not in accordance with the invention. Figure 12 is a cross-section of the arrangement of Figure 11. The armature 42 has a generally parallelepiped shape. At least one groove 44 is formed in the armature 42.
A spring member 46 is disposed in the groove 44. In this arrangement, the sleeve wherein the armature 42 is disposed would also have a generally parallelepiped shape. Other shapes of the armature are also possible, such as a star shape, a triangular shape, a pentagonal shape, etc.

With reference again to Figures 1-3, another arrangement not in accordance with the invention provides a method of stabilizing an electromagnetically operated actuator. The method includes providing an armature 20 with at least one groove 26 formed therein. A spring member 28 is placed in the groove 26. The armature 20 and spring member 28 are disposed in a sleeve 22. The armature 20 may have no through holes (Figure 8), one through hole (Figure 1) or a plurality of through holes (Figure 9). Because it is a spring, the spring member 28 exerts a radially outwardly directed spring force against the sleeve 22. The spring member 28 is free to expand and make contact with the sleeve 22 while maintaining contact with the armature 20. The spring member 28, therefore, constantly exerts mechanical friction between the armature 20 and the sleeve 22. The mechanical friction slows the response of the armature movement and extends the stable operating range of the component in which the armature 20 is disposed.

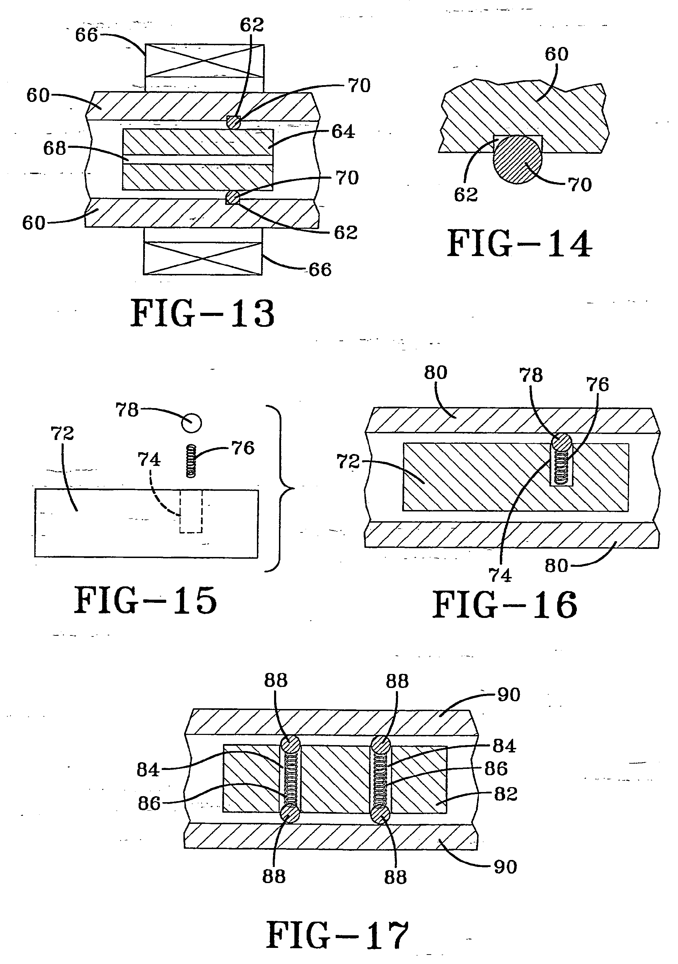

Figure 13 is a cross-section of a another arrangement not in accordance with the invention. Figure 14 shows the groove and spring member of Figure 13 in an enlarged view.

Referring to Figures 13 and 14, an armature 64 is movably disposed in a sleeve 60. When energized, an electric coil 66 causes the armature 64 to move within the sleeve 60. The sleeve 60 has at least one groove 62 formed on an interior surface thereof. The groove 62 may be formed in the sleeve 60 by, for example, machining. A spring member 70 is disposed in the groove 62. The spring member 70 is maintained in place in the sleeve 60 by exerting a radially outwardly directed spring force against the groove 62 in the sleeve 60.

The inside diameter of the spring member 70 forms a friction fit with the armature 64. The dynamic response of the armature 64 may be varied by using spring members 70 with different inside diameters. By changing the inside diameter of the spring member 70, the amount of friction force on the armature 64 changes. The amount of friction may also be changed by adding additional grooves 62 with spring members 70 disposed therein.

A hole 68 extends axially through the armature 64 so that fluid may flow through the armature from one side to the other. The hole 68 may be formed along the longitudinal axis of the armature or may be offset from the longitudinal axis.

The armature 64 is generally cylindrical in shape, although other shapes of the armature are possible. The groove 62 is located on the sleeve 60 where it will not interfere with the magnetic path. The groove 62 is concentric with the longitudinal axis of the sleeve. The groove 62 extends at least partially around the circumference of the sleeve and may extend completely around the sleeve. Likewise, the spring member 70 may extend partially around the circumference of the sleeve or it may extend completely around the sleeve.

Figure 15 is an exploded view of another arrangement. Figure 16 is a sectional view of the arrangement of Figure 15. In the arrangement of Figures 15 and 16, the armature 72 includes at least one radial opening 74. The radial opening 74 may be formed by, for example, drilling the opening 74 in the armature 72. A spring 76 is inserted in the radial opening 74. One end of the spring 76 bears against the bottom of the opening 74. A bearing member 78 is located on the other end of the spring 76. The bearing member 78 may be, for example, a ball bearing.

As shown in Figure 16, the bearing member 78 bears against the sleeve 80 because of the force of the spring member 76. The bearing member 78 creates a radially outwardly directed force against the sleeve 80. The force created by the bearing member 78 may be varied by changing the spring force of the spring member 76.

Figure 17 is a sectional view of yet further arrangement not within the scope of the invention. In Figure 17, the armature 82 includes at least one radial opening 84. The radial opening 84 extends completely through the armature 82. The radial opening 84 may be formed by, for example, drilling. A spring 86 is disposed in the radial opening 84. On each end of the spring 86 are bearing members 88, such as ball bearings. The bearing members 88 are in sliding contact with the sleeve 90.

The spring 86 forces the bearing members 88 radially outward against the sleeve thereby creating friction between the sleeve 90 and the bearing members 88. The amount of friction between the sleeve 90 and the bearing members 88 may be varied by changing the spring force of the spring 86. The friction force may also be changed by adding additional openings with springs and bearing members. Figure 17 shows two radial openings 84 with springs 86 and bearing members 88. Only one opening 84 may be used or more than two may be used, depending on the amount of friction desired.

While the invention has been described with reference to certain preferred embodiments, numerous changes, alterations and modifications to the described embodiments are possible without departing from the scope of the invention as defined in the appended claims.

## Claims

1. An apparatus, comprising:
an armature(20) of generally cylindrical shape having at least one groove (32,26) formed on an exterior surface thereof;
a sleeve (22), the armature being movably disposed in the sleeve;
a spring member (36) disposed in the at least one groove in the armature and in sliding contact with the sleeve wherein the spring member (36) exerts a radially outwardly directed spring force against the sleeve, **characterized in that** the.groove is formed on the armature in a helical pattern.

2. The apparatus of claim 1 further comprising an electric coil (24) disposed adjacent the sleeve for moving the armature in the sleeve.

3. The apparatus of claim 1 wherein the at least one groove is concentric with a longitudinal axis of the armature.

4. The apparatus of claim 3 wherein the at least one groove extends at least partially around a circumference of the armature and the spring member extends at least partially around the circumference of the armature.

5. The apparatus of claim 1 wherein the armature defines at least one hole (30) extending axially through the armature so that fluid may flow through the armature from one side to the other.

6. The apparatus of claim 3 wherein the armature has a plurality of grooves defined therein, the grooves being concentric with the longitudinal axis of the armature, the apparatus further comprising a plurality of spring members disposed in the plurality of grooves, respectively.

7. The apparatus of claim 5 wherein the armature defines a plurality of holes extending axially through the armature so that fluid may flow through the armature from one side to the other.

8. The apparatus of claim 1 wherein the armature includes a valve portion extending from one end thereof.

9. The apparatus of claim 8 wherein the valve portion is formed integrally with the armature.

10. The apparatus of claim 8 wherein the valve portion is threaded into the armature.

11. The apparatus of claim 1 wherein the sleeve comprises a plastic material.

12. The apparatus of claim 1 wherein the sleeve comprises a metal material.

13. The apparatus of claim 1 wherein the sleeve comprises a fiber-reinforced plastic material.

14. The apparatus of claim 1 wherein the spring member comprises a plastic material.

15. The apparatus of claim 1 wherein the spring member comprises a metal material.

16. The apparatus of claim 1 wherein the spring member comprises a fiber-reinforced plastic material.

17. A method of stabilizing an electromagnetically operated actuator, comprising:
providing an armature having at least one groove formed on an exterior surface thereof;
providing a sleeve wherein the armature is movably disposed in the sleeve; and
disposing a spring member in the at least one groove in the armature and in sliding contact with the sleeve whereby the spring member exerts a radially outwardly directed spring force against the sleeve, **characterized in that** in the step of providing, the armature the groove is formed in a helical pattern.

## Patentansprüche

1. Vorrichtung, die Folgendes umfasst:
einen allgemein zylinderförmigen Anker (20) mit mindestens einer Nut (32, 26), die an einer Außenfläche davon ausgebildet ist,
eine Schutzhülse (22), wobei der Anker beweglich in der Schutzhülse angeordnet ist,
ein Federelement (36), das in der mindestens einen Nut in dem Anker angeordnet ist und die Schutzhülse verschiebbar berührt, wobei das Federelement (36) eine radial nach außen gerichtete Federkraft auf die Schutzhülse ausübt, **dadurch gekennzeichnet, dass** die Nut in einem spiralförmigen Muster auf dem Anker ausgebildet ist.

2. Vorrichtung nach Anspruch 1, die des Weiteren eine elektrische Wicklung (24) umfasst, die zum Bewegen des Ankers in der Schutzhülse angrenzend an die Schutzhülse angeordnet ist.

3. Vorrichtung nach Anspruch 1, bei der die mindestens eine Nut mit einer Längsachse des Ankers konzentrisch ist.

4. Vorrichtung nach Anspruch 3, bei der die mindestens eine Nut zumindest teilweise um einen Umfang des Ankers herum verläuft und das Federelement zumindest teilweise um den Umfang des Ankers herum verläuft.

5. Vorrichtung nach Anspruch 1, bei der der Anker mindestens ein Loch (30) definiert, das axial so durch den Anker verläuft, dass Fluid von einer Seite zur anderen durch den Anker fließen kann.

6. Vorrichtung nach Anspruch 3, bei der der Anker mehrere darin definierte Nuten aufweist, die mit der Längsachse des Ankers konzentrisch sind, wobei die Vorrichtung des Weiteren mehrere Federelemente umfasst, die jeweils in den mehreren Nuten angeordnet sind.

7. Vorrichtung nach Anspruch 5, bei der der Anker mehrere Löcher definiert, die axial so durch den Anker verlaufen, dass Fluid von einer Seite zur anderen durch den Anker fließen kann.

8. Vorrichtung nach Anspruch 1, bei der der Anker einen Ventilabschnitt aufweist, der von einem Ende davon ausgeht.

9. Vorrichtung nach Anspruch 8, bei der der Ventilabschnitt einstückig mit dem Anker ausgebildet ist.

10. Vorrichtung nach Anspruch 8, bei der der Ventilabschnitt in den Anker geschraubt ist.

11. Vorrichtung nach Anspruch 1, bei der die Schutzhülse ein Kunststoffmaterial umfasst.

12. Vorrichtung nach Anspruch 1, bei der die Schutzhülse ein Metallmaterial umfasst.

13. Vorrichtung nach Anspruch 1, bei der die Schutzhülse ein faserverstärktes Kunststoffmaterial umfasst.

14. Vorrichtung nach Anspruch 1, bei der das Federelement ein Kunststoffmaterial umfasst.

15. Vorrichtung nach Anspruch 1, bei der das Federelement ein Metallmaterial umfasst.

16. Vorrichtung nach Anspruch 1, bei der das Federelement ein faserverstärktes Kunststoffmaterial umfasst.

17. Verfahren zum Stabilisieren eines elektromagnetisch betätigten Stellantriebs, das Folgendes umfasst:
Bereitstellen eines Ankers mit mindestens einer an einer Außenfläche davon ausgebildeten Nut,
Bereitstellen einer Schutzhülse, wobei der Anker beweglich in der Schutzhülse angeordnet ist, und
Anordnen eines Federelements in der mindestens einen Nut in dem Anker, das die Schutzhülse verschiebbar berührt, wobei das Federelement eine radial nach außen gerichtete Federkraft auf die Schutzhülse ausübt, **dadurch gekennzeichnet, dass** beim Bereitstellen des Ankers die Nut in einem spiralförmigen Muster ausgebildet wird.

## Revendications

1. Dispositif comprenant :
une armature (20) de forme générale cylindrique ayant au moins une rainure (32, 26) formée sur l'une de ses surfaces extérieures ;
un manchon (22), l'armature étant montée mobile dans le manchon ;
un élément (36) à ressort, disposé dans la au moins une rainure de l'armature et en contact coulissant avec le manchon, l'élément (36) à ressort appliquant une force de ressort dirigée radialement vers l'extérieur sur le manchon, **caractérisé en ce que** la rainure est formée sur l'armature suivant un motif hélicoïdal.

2. Dispositif selon la revendication 1, comprenant en outre une bobine (24) électrique disposée au voisinage du manchon pour déplacer l'armature dans le manchon.

3. Dispositif selon la revendication 1, dans lequel la au moins une rainure est concentrique à un axe longitudinal de l'armature.

4. Dispositif selon la revendication 3, dans lequel la au moins une rainure s'étend au moins en partie autour d'une circonférence de l'armature et l'élément à ressort s'étend au moins en partie autour de la circonférence de l'armature.

5. Dispositif selon la revendication 1, dans lequel l'armature définit au moins un trou (30) traversant axialement l'armature de sorte que du fluide peut passer dans l'armature d'un côté à l'autre.

6. Dispositif selon la revendication 3, dans lequel l'armature a une pluralité de rainures qui y sont définies, les rainures étant concentriques à l'axe longitudinal de l'armature, le dispositif comprenant en outre une pluralité d'éléments à ressort disposés dans la pluralité des rainures respectivement.

7. Dispositif selon la revendication 5, dans lequel l'armature définit une pluralité de trous traversant axialement l'armature de sorte que du fluide peut passer dans l'armature d'un côté à l'autre.

8. Dispositif selon la revendication 1, dans lequel l'armature comprend une partie de valve s'étendant à partir de l'une de ses extrémités.

9. Dispositif selon la revendication 8, dans lequel la partie de valve est d'un seul tenant avec l'armature.

10. Dispositif selon la revendication 8, dans lequel la partie de valve est vissée dans l'armature.

11. Dispositif selon la revendication 1, dans lequel le manchon comprend une matière plastique.

12. Dispositif selon la revendication 1, dans lequel le manchon comprend une matière métallique.

13. Dispositif selon la revendication 1, dans lequel le manchon comprend une matière plastique renforcée par de la fibre.

14. Dispositif selon la revendication 1, dans lequel l'élément à ressort comprend une matière plastique.

15. Dispositif selon la revendication 1, dans lequel l'élément à ressort comprend une matière métallique.

16. Dispositif selon la revendication 1, dans lequel l'élément à ressort comprend de la matière plastique renforcée par de la fibre.

17. Procédé de stabilisation d'un actionneur fonctionnant électromagnétiquement, dans lequel :
on se procure une armature ayant au moins une rainure formée sur l'une de ses surfaces extérieures ;
on se procure un manchon dans lequel l'armature est montée mobile dans le manchon ;
on met un élément à ressort dans la au moins une rainure de l'armature et en contact glissant avec le manchon de sorte que l'élément à ressort applique une force de ressort dirigée radialement vers l'extérieur sur le manchon, **caractérisé en ce que**, dans le stade dans lequel on se procure l'armature, on forme la rainure suivant un motif hélicoïdal.
